# EUROPÄISCHE PATENTSCHRIFT

(11) **EP 4 450 783 B1**
(45) Veröffentlichungstag und Bekanntmachung des Hinweises auf die Patenterteilung: **23.04.2025**
(21) Anmeldenummer: 24166133.9
(22) Anmeldetag: 26.03.2024
(51) Int. Cl.: F01N 13/18, F01N 3/021, F01N 3/10, F01N 3/20, F01N 13/00, F01N 3/28

(54) **MODULARTIG AUFGEBAUTE ABGASBEHANDLUNGSANORDNUNG**
MODULAR EXHAUST GAS TREATMENT ASSEMBLY
DISPOSITIF DE TRAITEMENT DE GAZ D'ÉCHAPPEMENT MODULAIRE

(30) Priorität: 21.04.2023 DE 102023110142
(43) Veröffentlichungstag der Anmeldung: 23.10.2024
(73) Patentinhaber: Purem GmbH, 66539 Neunkirchen (DE)
(72) Erfinder: Velyaev, Oleksandr, Stuttgart (DE); Lin, Shengxiao, Esslingen (DE); Kast, Peter, Esslingen (DE)
(74) Vertreter: Ruttensperger Lachnit Trossin Gomoll

(56) Entgegenhaltungen:
- DE-A1- 102020 007 553
- US-A1- 2009 158 721
- US-A1- 2010 242 450
- US-A1- 2022 251 994
- US-A1- 2022 356 832

## Beschreibung

Die vorliegende Erfindung betrifft modulartig aufgebaute Abgasbehandlungsanordnungen, welche insbesondere in Abgasanlagen von in Fahrzeugen eingesetzten Brennkraftmaschinen zur Verringerung des Schadstoffausstoßes beitragen.

Derartige beispielsweise in Zuordnung von Diesel-Brennkraftmaschinen eingesetzte Abgasbehandlungsanordnungen umfassen in Strömungsrichtung aufeinander folgend im Allgemeinen einen Diesel-Oxidationskatalysator, einen Diesel-Partikelfilter und einen SCR-Katalysator. Stromaufwärts des SCR-Katalysators ist eine Mischstrecke vorgesehen, in welcher Abgas und durch eine Reaktionsmittelabgabeanordnung, im Allgemeinen als Injektor bezeichnet, abgegebenes Reaktionsmittel, beispielsweise eine Harnstoff/Wasser-Lösung, zur nachfolgenden Durchführung einer selektiven katalytischen Reduktion im SCR-Katalysator vermischt und umgesetzt werden. Um den strenger werdenden Abgasnormen gerecht werden zu können, kann es erforderlich sein, diesen zur Abgasbehandlung vorgesehenen Systembereichen einen weiteren SCR-Katalysator vorzuschalten. In Zuordnung zu diesem weiteren SCR-Katalysator, im Allgemeinen als Vor-SCR-Katalysator bezeichnet, ist eine weitere Mischstrecke erforderlich, um stromaufwärts dieses Vor-SCR-Katalysators Abgas mit Reaktionsmittel zu vermischen und dem Vor-SCR-Katalysator zuzuführen.

Da in Fahrzeugen, wie zum Beispiel auch Nutzkraftfahrzeugen bzw. Lastkraftfahrzeugen, der zur Aufnahme von Abgasbehandlungsanordnungen zur Verfügung stehenden Bauraum begrenzt ist und auch dadurch vorgegeben ist, wo in derartigen Fahrzeugen die stromaufwärtigen bzw. stromabwärtigen Anschlussbereiche für die Integration einer Abgasbehandlungsanordnung in eine Abgasanlage vorgesehen sind, besteht grundsätzlich die Anforderung, weitere Systembereiche enthaltende Abgasbehandlungsanordnungen auch unter Beibehalt bzw. Erreichung eines optimalen Strömungsverhaltens bei möglichst geringem Gegendruck in dem Bauraum unterzubringen, der bei bereits bestehenden bzw. konzipierten Fahrzeugen zur Verfügung steht. Dies erfordert, dass auch bei Integration weiterer Systembereiche in derartige Abgasbehandlungsanordnungen deren Außenabmessungen von den Außenabmessungen bereits bestehender Abgasbehandlungsanordnungen nicht bzw. nicht wesentlich abweichen dürfen. Gleichzeitig muss die Möglichkeit bestehen bzw. erhalten bleiben, Zugriff auf Systembereiche derartiger Abgasbehandlungsanordnungen, die im Abgasbehandlungsbetrieb degradieren und daher einer Wartung bzw. eines Austauschs bedürfen, zu haben.

Eine modulartig aufgebaute Abgasbehandlungsanordnung gemäß dem Oberbegriff des Anspruchs 1 ist aus der US 2022/0356832 A1 bekannt. Bei dieser modulartig aufgebauten Abgasbehandlungsanordnung sind eine Eintrittsschnittstelle, eine in Strömungsrichtung auf die Eintrittsschnittstelle folgende erste Mischstrecke, eine in Strömungsrichtung auf die erste Mischstrecke folgende erste Abgasbehandlungsstrecke, eine in Strömungsrichtung auf die erste Abgasbehandlungsstrecke folgende zweite Mischstrecke, eine in Strömungsrichtung auf die zweite Mischstrecke folgende zweite Abgasbehandlungsstrecke, ein einen Austrittsbereich der ersten Mischstrecke mit einem Eintrittsbereich der ersten Abgasbehandlungsstrecke verbindendes erstes Umlenkgehäuse, ein einen Austrittsbereich der ersten Abgasbehandlungsstrecke mit einem Eintrittsbereich der zweiten Mischstrecke verbindendes zweites Umlenkgehäuse und ein einen Austrittsbereich der zweiten Mischstrecke mit einem Eintrittsbereich der zweiten Abgasbehandlungsstrecke verbindendes drittes Umlenkgehäuse zu einem Modul der Abgasbehandlungsanordnung zusammengefasst. Im ersten Umlenkgehäuse ist eine durch ein Abschlusselement verschließbare Öffnung ausgebildet. Durch diese Öffnung hindurch kann erforderlichenfalls ein einen SCR-Katalysator und einen Dieseloxidationskatalysator der ersten Abgasbehandlungsstrecke umfassendes weiteres Modul der Abgasbehandlungsanordnung aus einem Gehäuse der ersten Abgasbehandlungsstrecke entfernt und durch ein entsprechendes einen SCR-Katalysator und einen Dieseloxidationskatalysator umfassendes Modul ersetzt werden.

Es ist die Aufgabe der vorliegenden Erfindung, eine Abgasbehandlungsanordnung, insbesondere für eine Abgasanlage einer Brennkraftmaschine in einem Fahrzeug, vorzusehen, welche bei verbessertem Abgasbehandlungsvermögen die Möglichkeit der Wartung bzw. des Austauschs von Systembereichen derselben bietet.

Erfindungsgemäß wird diese Aufgabe gelöst durch eine modulartig aufgebaute Abgasbehandlungsanordnung, umfassend:
- eine Eintrittsschnittstelle zur Aufnahme von Abgas in der Abgasbehandlungsanordnung,
- eine erste Mischstrecke,
- eine erste Abgasbehandlungsstrecke mit einer ersten Katalysatoranordnung und einer Partikelfilteranordnung,
- eine zweite Mischstrecke,
- eine zweite Abgasbehandlungstrecke mit einer zweiten Katalysatoranordnung,
- ein einen Austrittsbereich der ersten Mischstrecke mit einem Eintrittsbereich der ersten Abgasbehandlungsstrecke verbindendes erstes Umlenkgehäuse,
- ein einen Austrittsbereich der ersten Abgasbehandlungsstrecke mit einem Eintrittsbereich der zweiten Mischstrecke verbindendes zweites Umlenkgehäuse,
- ein einen Austrittsbereich der zweiten Mischstrecke mit einem Eintrittsbereich der zweiten Abgasbehandlungsstrecke verbindendes drittes Umlenkgehäuse.

Bei dieser Abgasbehandlungsanordnung ist erfindungsgemäß weiter vorgesehen, dass:
- ein erstes Modul die Eintrittsschnittstelle und die erste Mischstrecke umfasst,
- ein zweites Modul das erste Umlenkgehäuse und die erste Katalysatoranordnung der ersten Abgasbehandlungsstrecke umfasst, wobei das zweite Modul mit dem ersten Modul lösbar verbunden ist,
- ein drittes Modul die Partikelfilteranordnung der ersten Abgasbehandlungsstrecke umfasst, wobei das dritte Modul mit dem zweiten Modul lösbar verbunden ist,
- ein viertes Modul das zweite Umlenkgehäuse umfasst, wobei das vierte Modul mit dem dritten Modul lösbar verbunden ist,
- ein fünftes Modul die zweite Mischstrecke, das dritte Umlenkgehäuse und die zweite Abgasbehandlungsstrecke umfasst, wobei das fünfte Modul mit dem vierten Modul lösbar verbunden ist.

Durch die Aufgliederung der Abgasbehandlungsanordnung in eine Mehrzahl von miteinander lösbar verbundenen Modulen besteht die Möglichkeit, jedes derartige Modul für sich alleine und losgelöst von anderen Modulen aufzubauen und als solches in die Abgasbehandlungsanordnung zu integrieren bzw. zur Durchführung von Wartungs- oder Erneuerungsarbeiten aus dieser zu entnehmen. Gleichzeitig unterstützt die Verwendung einer Mehrzahl von Modulen in der Abgasbehandlungsanordnung eine derartige räumliche Positionierung der einzelnen Module bzw. der Systembereiche der einzelnen Module zueinander, dass eine kompakte Bauart erhalten wird, welche es gestattet, eine insbesondere auch eine weitere Mischstrecke enthaltende Abgasbehandlungsanordnung in den bei bereits aufgebauten bzw. konzipierten Fahrzeugen zur Verfügung stehenden Bauraum zu integrieren.

Für eine einfach zu realisierende, gleichwohl zuverlässige und gasdichte Verbindung der Module miteinander wird vorgeschlagen, dass wenigstens ein Modul von erstem Modul, zweitem Modul, drittem Modul, viertem Modul und fünftem Modul mit wenigstens einem weiteren Modul von erstem Modul, zweitem Modul, drittem Modul, viertem Modul und fünftem Modul durch eine Schraubverbindung oder/und eine Schellenverbindung lösbar verbunden ist.

Es ist in diesem Zusammenhang darauf hinzuweisen, dass dann, wenn zwei Module im Bereich rohrartiger Elemente aneinander anschließen und miteinander lösbar zu verbinden sind, die rohrartigen Elemente mit flanschartigen Enden derselben gegebenenfalls unter Zwischenlagerung eines Dichtungselements aneinander angrenzend positioniert werden können und durch eine die flanschartigen Enden außen umgreifende Rohrschelle oder durch durch die flanschartigen Enden hindurchgeführte bzw. diese miteinander koppelnde Schraubbolzen oder dergleichen miteinander verbunden werden können. Zur lösbaren Anbindung eines rohrartigen Elements eines Moduls an ein Umlenkgehäuse eines anderen Moduls kann ein flanschartig ausgebildetes Ende des rohrartigen Elements durch dieses und eine Wand des Umlenkgehäuses durchgreifende bzw. daran vorgesehenen Schraubbolzen oder dergleichen an das Umlenkgehäuse angebunden werden. Alternativ kann zur Anbindung eines rohrartigen und mit einem flanschartigen Ende aufgebauten Elements eines Moduls an ein Umlenkgehäuse das Umlenkgehäuse einen von einer Wand desselben hervorstehenden, rohrartigen bzw. stutzenartigen Bereich mit einem flanschartigen Ende aufweisen, der dem flanschartigen Ende des rohrartig aufgebauten Elements gegebenenfalls unter Zwischenlagerung eines Dichtungselements gegenüberliegend positioniert wird und vermittels einer diese flanschartigen Enden außen umgreifenden Rohrschelle oder einer Mehrzahl von die flanschartigen Enden durchgreifenden bzw. miteinander koppelnden Schraubbolzen oder dergleichen verbunden wird.

Zur lösbaren Verbindung des ersten Moduls mit dem zweiten Modul kann der Austrittsbereich der ersten Mischstrecke mit einem Eintrittsbereich des ersten Umlenkgehäuses lösbar verbunden sein.

Das zweite Modul kann mit dem dritten Modul in einfacher Weise dadurch lösbar gekoppelt sein, dass ein Austrittsbereich der ersten Katalysatoranordnung mit einem Eintrittsbereich der Partikelfilteranordnung lösbar verbunden ist.

Das dritte Modul kann an das vierte Modul dadurch lösbar angebunden sein, dass ein Austrittsbereich der Partikelfilteranordnung mit einem Eintrittsbereich des zweiten Umlenkgehäuses lösbar verbunden ist.

Zur lösbaren Verbindung des vierten Moduls mit dem fünften Modul wird vorgeschlagen, dass ein Austrittsbereich des zweiten Umlenkgehäuses mit dem Eintrittsbereich der zweiten Mischstrecke lösbar verbunden ist.

Zur effizienten Minderung des Stickoxidanteils in dem von einer Brennkraftmaschine, insbesondere einer Diesel-Brennkraftmaschine, ausgestoßenen Abgas wird vorgeschlagen, dass die erste Katalysatoranordnung eine Vor-SCR-Katalysatoreinheit umfasst, und dass das erste Modul eine erste Reaktionsmittelschnittstelle zur Aufnahme einer ersten Reaktionsmittelabgabeanordnung aufweist.

Beispielsweise kann die erste Reaktionsmittelschnittstelle im Bereich des Eintrittsbereichs der ersten Mischstrecke vorgesehen sein.

Die erste Katalysatoranordnung kann ferner eine Oxidationskatalysatoreinheit umfassen.

Um den Stickoxidanteil in dem von einer Brennkraftmaschine ausgestoßenen Abgas so weit als möglich zu senken, kann die zweite Katalysatoranordnung wenigstens eine Haupt-SCR-Katalysatoreinheit umfassen, und das vierte Modul kann eine zweite Reaktionsmittelschnittstelle zur Aufnahme einer zweiten Reaktionsmittelabgabeanordnung aufweisen.

Um die Kapazität der zweiten Katalysatoranordnung zur Minderung des Stickoxidanteils möglichst groß zu gestalten, kann diese zwei zueinander parallel geschaltete Haupt-SCR-Katalysatoreinheiten umfassen.

Zum Erreichen einer kompakten Ausgestaltung wird vorgeschlagen, dass in Umfangsrichtung um eine Längsmittenachse der Abgasbehandlungsanordnung eine der Haupt-SCR-Katalysatoreinheiten auf die erste Abgasbehandlungsstrecke folgt, die zweite Mischstrecke auf die eine Haupt-SCR-Katalysatoreinheit der beiden Haupt-SCR-Katalysatoreinheiten folgt, die andere Haupt-SCR-Katalysatoreinheit der beiden Haupt-SCR-Katalysatoreinheiten auf die zweite Mischstrecke folgt und die erste Abgasbehandlungsstrecke auf die andere Haupt-SCR-Katalysatoreinheit der beiden Haupt-SCR-Katalysatoreinheiten folgt.

Eine kompakte Bauart der erfindungsgemäßen Abgasbehandlungsanordnung kann weiter dadurch unterstützt werden, dass die erste Mischstrecke in Richtung einer zu einer Abgasbehandlungsanordnung-Längsachse im Wesentlichen parallelen ersten Mischstrecken-Längsachse langgestreckt ist, dass die zweite Mischstrecke in Richtung einer zu der Abgasbehandlungsanordnung-Längsachse im Wesentlichen parallelen zweiten Mischstrecken-Längsachse langgestreckt ist, dass die erste Abgasbehandlungsstrecke in Richtung einer zu der Abgasbehandlungsanordnung-Längsachse im Wesentlichen parallelen ersten Abgasbehandlungsstrecken-Längsachse langgestreckt ist, dass die zweite Abgasbehandlungsstrecke in Richtung einer zu der Abgasbehandlungsanordnung-Längsachse im Wesentlichen parallelen zweiten Abgasbehandlungsstrecke-Längsachse langgestreckt ist, und dass die erste Mischstrecke, die zweite Mischstrecke, die erste Abgasbehandlungsstrecke und die zweite Abgasbehandlungsstrecke einander in Richtung der Abgasbehandlungsanordnung-Längsachse überlappend angeordnet sind.

Wenn dabei das erste Umlenkgehäuse und das dritte Umlenkgehäuse in einem ersten axialen Endbereich der Abgasbehandlungsanordnung bezüglich einer Abgasbehandlungsanordnung-Längsachse angeordnet sind und das zweite Umlenkgehäuse in einem zweiten axialen Endbereich bezüglich der Abgasbehandlungsanordnung-Längsachse angeordnet ist, liegen im Wesentlichen alle in Richtung der Abgasbehandlungsanordnung-Längsachse sich erstreckenden Systembereiche im gleichen axialen Bereich bzw. einander im Wesentlichen vollständig überlappend, so dass eine in Richtung der Abgasbehandlungsanordnung-Längsachse kompakte Bauart erreicht wird.

Zur Abgabe von behandeltem Abgas aus der Abgasbehandlungsanordnung kann ein Austrittsgehäuse vorgesehen sein, wobei ein Austrittsbereich der zweiten Abgasbehandlungsstrecke zu dem Austrittsgehäuse offen ist, und an dem Austrittsgehäuse kann eine Austrittsschnittstelle zur Abgabe von Abgas aus der Abgasbehandlungsanordnung vorgesehen sein. Beispielsweise kann das Austrittsgehäuse einen Bestandteil des fünften Moduls bilden.

Zur Unterstützung der Durchmischung von Abgas und Reaktionsmittel in der zweiten Mischstrecke kann wenigstens ein Teil der zweiten Mischstrecke sich im Inneren des Austrittsgehäuses erstrecken.

Die Erfindung betrifft ferner eine Abgasanlage für eine Brennkraftmaschine, umfassend eine erfindungsgemäß aufgebaute Abgasbehandlungsanordnung.

Die vorliegende Erfindung wird nachfolgend mit Bezug auf die beiliegenden Figuren detailliert beschrieben. Es zeigt:
- Fig. 1: eine prinzipartige Draufsicht auf eine Abgasbehandlungsanordnung in Blickrichtung I in Fig. 2;
- Fig. 2: die Abgasbehandlungsanordnung der Fig. 1 in Blickrichtung II in Fig. 1;
- Fig. 3: die Abgasbehandlungsanordnung der Fig. 1 in Blickrichtung III in Fig1;
- Fig. 4: in prinzipartiger Darstellung die lösbare Verbindung zweier Module der Abgasbehandlungsanordnung der Fig. 1;
- Fig. 5: in prinzipartiger Darstellung den Bereich der Abgasbehandlungsanordnung der Fig. 1, in welchem das in der Abgasbehandlungsanordnung behandelte Abgas an einer Austrittsschnittstelle die Abgasbehandlungsanordnung verlässt.

In den Figuren ist eine prinzipartig dargestellte Abgasbehandlungsanordnung für eine Abgasanlage 10 einer Brennkraftmaschine allgemein mit 12 bezeichnet. Die Abgasanlage 12 ist grundsätzlich modulartig aufgebaut und umfasst fünf nachfolgend im Einzelnen beschriebene Module M1 bis M5, die miteinander lösbar verbunden sind.

Ein erstes Modul M1 umfasst eine beispielsweise mit einem rohrartigen Element 26 aufgebaute erste Mischstrecke 14. An einem Eintrittsbereich 16 der ersten Mischstrecke 14 ist eine beispielsweise mit einem Rohrabschnitt oder einem Rohrstutzen aufgebaute Eintrittsschnittstelle 18 der Abgasbehandlungsanordnung 12 vorgesehen, mit welcher diese an einen stromaufwärtigen Bereich der Abgasanlage 10 angebunden werden kann. Von einer Brennkraftmaschine ausgestoßenes Abgas A tritt im Bereich der Eintrittsschnittstelle 18 in die Abgasanlage 12 ein.

Im Bereich des Eintrittsbereichs 16 der ersten Mischstrecke 14 bzw. an dem auch die Eintrittsschnittstelle 18 bereitstellenden rohrartigen Element 20 ist eine erste Reaktionsmittelschnittstelle 22 vorgesehen. Im Bereich der ersten Reaktionsmittelschnittstelle 22 kann eine allgemein auch als Injektor bezeichnete erste Reaktionsmittelabgabeanordnung 24 an das Modul M1 in einem stromaufwärtigen Bereich der ersten Mischstrecke 14 angebunden werden. Durch die erste Reaktionsmittelabgabeanordnung 24 kann ein Reaktionsmittel, beispielsweise eine Harnstoff/Wasser-Lösung, in das im Bereich der Eintrittsschnittstelle 18 in die Abgasanlage 12 einströmende Abgas A eingeleitet werden. Zur effizienten Durchmischung von im Allgemeinen als Sprühnebel abgegebenem Reaktionsmittel mit dem Abgas A kann in der ersten Mischstrecke 14 beispielsweise ein mit einer Vielzahl von schaufelartigen Ablenkelementen oder dergleichen aufgebauter Mischer angeordnet sein. Beim Strömen entlang des im Wesentlichen in einer ersten Mischstrecken-Längsrichtung L_{M1} langgestreckten rohrartigen Elements 26 der ersten Mischstrecke 14 durchmischt sich das Abgas A mit dem Reaktionsmittel.

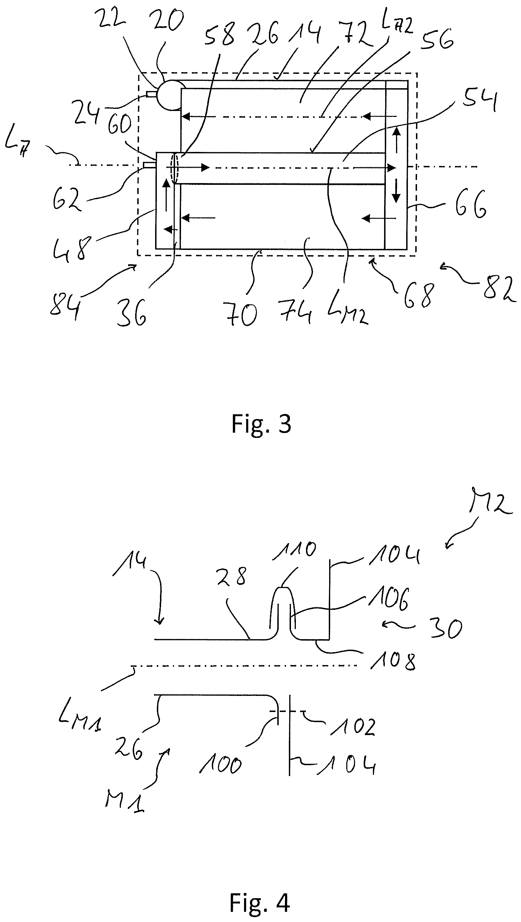

Ein stromabwärtiger Austrittsbereich 28 der ersten Mischstrecke 14 ist, wie durch einen in Strichlinie angedeuteten Bereich veranschaulicht, mit einem ersten Umlenkgehäuse 30 lösbar verbunden. Dazu kann ein im unteren Teil der in Fig.4 erkennbares flanschartiges Ende 100 des rohrartigen Elements 26 der ersten Mischstrecke 14 durch eine Mehrzahl von Schraubbolzen 102 oder dergleichen an eine Wand 104 des ersten Umlenkgehäuses 30 lösbar angebunden sein. Alternativ kann, wie im oberen Teil der Fig. 4 veranschaulicht, an der Wand 100 des ersten Umlenkgehäuses 30 ein mit einem flanschartigen Ende 106 ausgebildeter Rohrstutzen 108 vorgesehen sein, wobei die dann aneinander anliegenden flanschartigen Enden 100, 106 am rohrartigen Element 26 einerseits und am ersten Umlenkgehäuse 30 andererseits durch eine Mehrzahl von Schraubbolzen oder durch eine diese umgebende Rohrschelle 110 miteinander fest und gasdicht verbunden werden können.

Das im Austrittsbereich 28 der ersten Mischstrecke 14 in das erste Umlenkgehäuse 30 in einem Eintrittsbereich 31 desselben eingeleitete Abgas bzw. Gemisch aus Abgas und Reaktionsmittel wird im ersten Umlenkgehäuse 30 bezüglich einer Abgasbehandlungsanordnung-Längsrichtung L_{A} um etwa 180° umgelenkt und verlässt das erste Umlenkgehäuse 30 in Richtung zu einer ersten Abgasbehandlungsstrecke 32. Die erste Abgasbehandlungsstrecke 32 umfasst in Strömungsrichtung aufeinander folgend eine erste Katalysatoranordnung 34 und eine Partikelfilteranordnung 36. Die erste Katalysatoranordnung 34 umfasst eine Vor-SCR-Katalysatoreinheit 38 und beispielsweise stromabwärts derselben eine Oxidationskatalysatoreinheit 40.

Das erste Umlenkgehäuse 30 bildet mit der ersten Katalysatoranordnung 34 der grundsätzlich in einer ersten Abgasbehandlungsanordnung-Längsrichtung L_{A1} langgestreckten und in diese Richtung auch durchströmbaren ersten Abgasbehandlungsstrecke 32 ein zweites Modul M2. Hierzu kann beispielsweise ein die Vor-SCR-Katalysatoreinheit 38 und die Oxidationskatalysatoreinheit 40 unter Zwischenlagerung von beispielsweise faserartigem bzw. mattenartigem Lagermaterial aufnehmender rohrartiger Mantel der ersten Katalysatoranordnung 34 an eine Wand des ersten Umlenkgehäuses 30 fest, beispielsweise durch Materialschluss angebunden sein. Alternativ kann ein rohrartiges Gehäuse der ersten Katalysatoranordnung 34 an das erste Umlenkgehäuse 30 fest angebunden sein. In diesem rohrartigen Gehäuse können dann die Vor-Katalysatoreinheit 38 bzw. die Oxidationskatalysatoreinheit 40 aufgenommen sein. Jede dieser Einheiten kann dann wiederum mit einem Mantel und dem darin beispielsweise unter Zwischenlagerung von faserartigem bzw. mattenartigem Material aufgenommenen Katalysatorblock aufgebaut sein.

Die Partikelfilteranordnung 36 bildet ein drittes Modul M3 der Abgasbehandlungsanordnung 10. Ein Eintrittsbereich 42 der Partikelfilteranordnung 36 ist mit einem Austrittsbereich 44 der ersten Katalysatoranordnung 34, wie durch eine Strichlinie angedeutet, lösbar verbunden. Hierzu können die erster Katalysatoranordnung 34 und die Partikelfilteranordnung 36, welche grundsätzlich mit rohrartigen Gehäuseelementen bzw. Mänteln aufgebaut sind, in ihren aneinander anschließenden Enden, also im Eintrittsbereich 42 und im Austrittsbereich 44, flanschartig ausgebildet sein und durch eine diese umgreifende Rohrschelle oder durch eine Mehrzahl von Schraubbolzen lösbar und gasdicht miteinander verbunden sein.

Ein Austrittsbereich 46 der Partikelfilteranordnung 36 schließt lösbar an ein zweites Umlenkgehäuse 48 an. Das zweite Umlenkgehäuse 48 bildet in der Abgasbehandlungsanordnung 12 ein viertes Modul M4. Ein Eintrittsbereich 50 des zweiten Umlenkgehäuses 48 ist mit dem Austrittsbereich 46 der Partikelfilteranordnung beispielsweise in einer Art und Weise, wie dies vorangehend mit Bezug auf die Verbindung des ersten Umlenkgehäuses 30 mit der ersten Mischstrecke 14 beschrieben wurde, durch eine Rohrschelle oder durch eine Mehrzahl von Schraubbolzen oder dergleichen lösbar und gasdicht verbunden.

Im zweiten Umlenkgehäuse 48 wird das aus der ersten Abgasbehandlungsstrecke 32 in Richtung der ersten Abgasbehandlungsstrecken-Längsachse L_{A1} bzw. in Richtung der Abgasbehandlungsanordnung-Längsachse L_{A} strömende Abgas bzw. Gemisch aus Abgas und Reaktionsmittel umgelenkt, und im Bereich eines Austrittsbereichs 52 des zweiten Umlenkgehäuses 48 verlässt das Abgas das im Wesentlichen durch das zweite Umlenkgehäuse 48 bereitgestellte vierte Modul M4 in Richtung zu einer im Wesentlichen ein rohrartiges Element 54 umfassenden zweiten Mischstrecke 56. Ein Eintrittsbereich 58 der zweiten Mischstrecke 56 ist lösbar mit dem Austrittsbereich 52 des zweiten Umlenkgehäuses 48 verbunden. Auch hier kann die lösbare Verbindung in der vorangehend mit Bezug auf die lösbare Verbindung zwischen dem Austrittsbereich 28 der ersten Mischstrecke 14 und dem Eintrittsbereich 31 des ersten Umlenkgehäuses 30 beschriebenen Art und Weise verbunden sein.

In Zuordnung zu der zweiten Mischstrecke 56 ist am vierten Modul M4 bzw. am zweiten Umlenkgehäuse 48 eine zweite Reaktionsmittelschnittstelle 60 vorgesehen. Im Bereich der im Wesentlichen dem Eintrittsbereich 58 der zweiten Mischstrecke 56 gegenüberliegenden zweiten Reaktionsmittelschnittstelle 60 ist eine zweite Reaktionsmittelabgabeanordnung 62 am zweiten Umlenkgehäuse 48 festgelegt, so dass von der zweiten Reaktionsmittelabgabeanordnung 62 abgegebenes Reaktionsmittel, beispielsweise eine Harnstoff/Wasser-Lösung, zusammen mit dem das zweite Umlenkgehäuse 48 durchströmenden Abgas in den Eintrittsbereich 58 der zweiten Mischstrecke 56 eingeleitet wird. In dem in einer zweiten Mischstrecken-Längsrichtung L_{M2} langgestreckten, rohrartigen Element 54 der zweiten Mischstrecke 56 strömt das Gemisch aus Abgas und Reaktionsmittel, wobei zum Unterstützen der Durchmischung in dem rohrartigen Element 54 ein eine Mehrzahl von Ablenkschaufeln oder dergleichen umfassender Mischer angeordnet sein kann.

An einem Austrittsbereich 64 der zweiten Mischstrecke 56 schließt diese an ein drittes Umlenkgehäuse 66 an. Dabei kann das rohrartige Element 54 der zweiten Mischstrecke 56 mit einer Wand des dritten Umlenkgehäuses 66 beispielsweise durch Verschweißen oder dergleichen fest verbunden sein.

Es ist darauf hinzuweisen, dass die in der Abgasbehandlungsanordnung 12 vorgesehenen Umlenkgehäuse 30, 48, 66 dort, wo an jeweilige Eintrittsbereiche bzw. Austrittsbereiche derselben die Mischstrecken 14, 56 bzw. die Abgasbehandlungsstrecken 32, 68 anschließen, Öffnungen aufweisen, um den Eintritt bzw. den Austritt von Abgas und gegebenenfalls Reaktionsmittel in bzw. aus in den Umlenkgehäusen 30, 48, 66 gebildeten Umlenkkammern zu ermöglichen.

In dem dritten Umlenkgehäuse 66 wird das die zweite Mischstrecke 56 verlassende Gemisch aus Abgas und Reaktionsmittel um etwa 180° in Richtung zu einer allgemein mit 68 bezeichneten zweiten Abgasbehandlungsstrecke umgelenkt. Die zweite Abgasbehandlungsstrecke 68 umfasst eine zweite Katalysatoranordnung 70 mit zwei quer zur Abgasbehandlungs-Längsrichtung L_{A} nebeneinander angeordneten und in einer zweiten Abgasbehandlungsstrecken-Längsrichtung L_{A2} langgestreckten Haupt-SCR-Katalysatoreinheiten 72, 74. Jede der Haupt-SCR-Katalysatoreinheiten 72, 74 kann einen rohrartigen Mantel aufweisen, welcher an eine Wand des dritten Umlenkgehäuses 66 durch Verschweißen oder dergleichen fest und gasdicht angebunden sein kann und in welchem jeweils zumindest ein Katalysatorblock unter Zwischenlagerung von faserartigem bzw. mattenartigem Material gehalten sein kann. Alternativ kann jede der Haupt-SCR-Katalysatoreinheiten 72, 74 ein an das dritte Umlenkgehäuse 66 beispielsweise durch Verschweißen oder dergleichen fest angebundenes rohrartiges Gehäuse aufweisen, in welches dann jeweils zumindest eine Katalysatoreinheit jeweils mit einem rohrartigen Mantel und einem darin beispielsweise durch faserartiges Material oder Mattenmaterial gehaltenem Katalysatorblock aufgenommen sein kann.

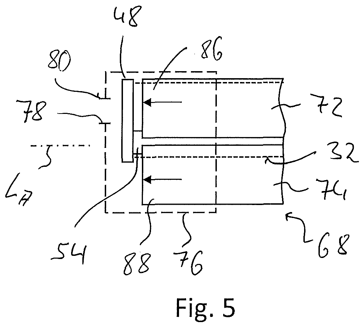

An ihren stromabwärtigen Enden 86, 88 sind die beiden Haupt-SCR-Katalysatoreinheiten 72, 74 der zweiten Katalysatoranordnung 70 zu einem allgemein mit 76 bezeichneten und in Fig. 5-Linie angedeuteten Austrittsgehäuse offen. Die Anordnung kann derart sein, dass das rohrartige Element 54 der zweiten Mischstrecke 56 das Austrittsgehäuse 76 wenigstens bereichsweise durchsetzt, so dass aus den Haupt-SCR-Katalysatoreinheiten 72, 74 ausströmendes Abgas das rohrartige Element 54 zumindest bereichsweise umströmen kann und dabei Wärme auf dieses überträgt. Dadurch kann die Verdampfung von Reaktionsmittel in der zweiten Mischstrecke 56 und damit auch die Durchmischung des Reaktionsmittels mit dem Abgas unterstützt werden. An dem Austrittsgehäuse 76 ist eine beispielsweise durch ein rohrartiges Element 78 oder eine Öffnung in dem Austrittsgehäuse 76 bereitgestellte Austrittsschnittstelle 80 der Abgasbehandlungsanordnung 12 vorgesehen. Mit dieser Austrittsschnittstelle 80 kann die Abgasbehandlungsanordnung 12 an einen stromabwärts folgenden, beispielsweise rohrartigen Systembereich der Abgasanlage 10 angeschlossen werden, so dass das in der Abgasbehandlungsanordnung 12 behandelte, schadstoffreduzierte Abgas aus der Abgasbehandlungsanordnung 12 abgeleitet werden kann.

Um Zugriff auf das im Wesentlichen durch das zweite Umlenkgehäuse 48 bereitgestellte vierte Modul M4 sowie auch die im Wesentlichen das zweite dritte Modul M3 bereitstellende Partikelfilteranordnung 36 zu erhalten, kann das Austrittsgehäuse 76 mehrteilig ausgebildet sein und beispielsweise einen auch die Austrittschnittstelle 80 bereitstellenden, lösbaren Gehäuseboden aufweisen. Alternativ oder zusätzlich kann das Austrittsgehäuse 76 in einem seitlichen Bereich zum Öffnen ausgebildet sein, um seitlich Zugriff auf die im Inneren des Austrittsgehäuses 76 liegenden Systembereichen der Abgasbehandlungsanordnung 12 zu erhalten.

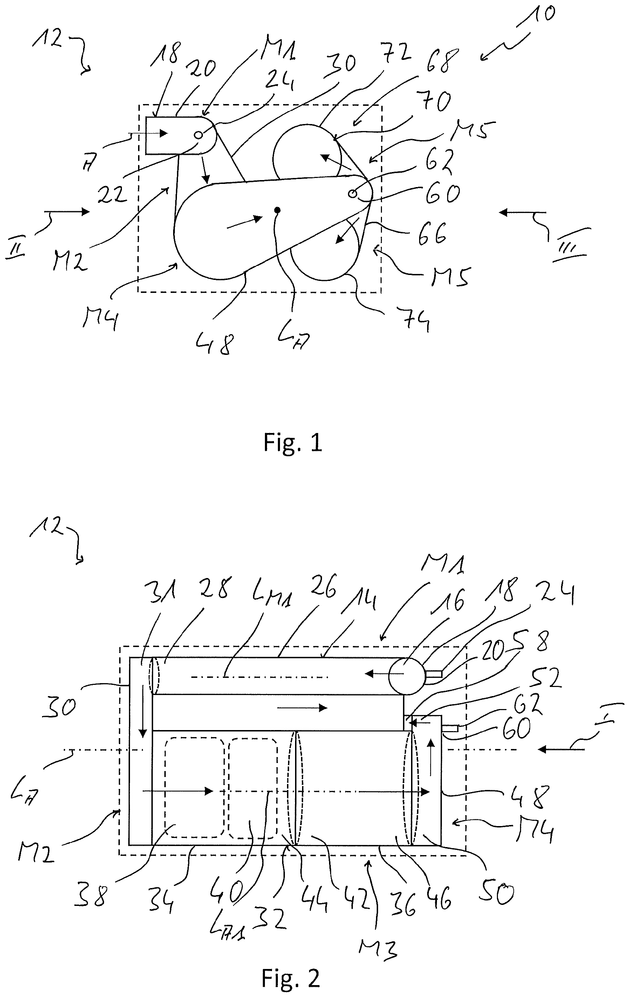

Bei der in den Fig. 1 bis 3 dargestellten Abgasbehandlungsanordnung 12 bilden somit die zweite Mischstrecke 56, das dritte Umlenkgehäuse 66, die zweite Abgasbehandlungsstrecke 68, das Austrittsgehäuse 76 und die daran vorgesehene Austrittsschnittstelle 80 ein fünftes Modul M5, welches in der vorangehend beschriebenen Art und Weise im Bereich des Eintrittsbereichs 58 der zweiten Mischstrecke 56 lösbar an das im Wesentlichen durch das zweite Umlenkgehäuse 48 bereitgestellte vierte Modul M4 angebunden ist.

Durch den modulartigen Aufbau der Abgasbehandlungsanordnung 12 wird eine kompakte Struktur erreicht, bei welcher jedes der Module M1 bis M5 für sich separat aufgebaut werden kann, um die in sich mit hoher struktureller Festigkeit und vorzugsweise fest und unlösbar miteinander verbundenen Systembereichen, wie zum Beispiel Umlenkgehäusen und rohrartigen Elementen, bereitgestellten Module dann in der vorangehend beschriebenen Art und Weise miteinander lösbar zu verbinden. Dabei liegen die verschiedenen in der Abgasbehandlungsanordnung-Längsrichtung L_{A} langgestreckten Systembereiche der Abgasbehandlungsanordnung 12, im Wesentlichen also die beiden Mischstrecken 14, 56 und die beiden Abgasbehandlungsstrecken 32, 68, quer zur Abgasbehandlungsanordnung-Längsrichtung L_{A} nebeneinander und einander im Wesentlichen vollständig axial überlappend, so dass sich eine Struktur ergibt, bei welcher das erste Umlenkgehäuse 30 und das dritte Umlenkgehäuse 66 im Wesentlichen im gleichen axialen Bereich bzw. in einem ersten axialen Endbereich 82 der Abgasbehandlungsanordnung 12 positioniert sind und das zweite Umlenkgehäuse 48 im Wesentlichen in einem zweiten axialen Endbereich 84 der Abgasbehandlungsanordnung 12 positioniert ist. In diesem zweiten axialen Endbereich 84 sind auch die Eintrittsschnittstelle 18 und die Austrittsschnittstelle 80 positioniert. Somit ergibt sich eine in den Fig. 1 bis 3 durch Strichlinie angedeutete, grundsätzlich quaderartige Außenumfangskontur der gesamten Abgasbehandlungsanordnung 12, welche in den dafür in Fahrzeugen, insbesondere in Nutzkraftfahrzeugen bzw. Lastkraftfahrzeugen, vorgesehenen Bauraum integriert werden kann.

Aufgrund der vorangehend beschriebenen Anordnung der verschiedenen Systembereiche der Abgasbehandlungsanordnung 12 in verschiedenen definiert zueinander positionierten Modulen wird es dabei auch möglich, die erste Mischstrecke 14 und die Vor-SCR-Katalysatoreinheit 38 in den für eine derartige Abgasbehandlungsanordnung 12 bereitgestellten Bauraum zu integrieren. Bei dieser kompakten Positionierung der verschiedenen Module zueinander überkreuzt das im Wesentlichen das vierte Modul M4 bereitstellende zweite Umlenkgehäuse 48 die zum Ausströmen von Abgas grundsätzlich offenen Enden der beiden Haupt-SCR-Katalysatoreinheiten 72, 74 quer zur Abgasbehandlungsanordnung-Längsachse L_{A}. Dies führt zu einer Struktur, bei welcher die erste Abgasbehandlungsstrecke 32 und die zweite Mischstrecke 56 bzw. deren jeweilige Längsachsen definierende Längsrichtungen L_{A1}, L_{M2} einerseits und im Wesentlichen in der zweiten Abgasbehandlungsstrecken-Längsrichtung L_{A2} sich erstreckende Längsmittenachsen der beiden Haupt-SCR-Katalysatoreinheiten 72, 74 andererseits bezüglich der im Wesentlichen eine Längsmittenachse der Abgasbehandlungsanordnung 12 definierenden Abgasbehandlungsanordnung-Längsrichtung L_{A} einander paarweise gegenüberliegen, so dass eine die erste Abgasbehandlungsstrecken-Längsrichtung L_{A1} und die zweite Mischstrecken-Längsrichtung L_{M2} verbindende und zu diesen Richtungen jeweils orthogonal stehende Linie und eine die Längsmittenachsen der beiden Haupt-SCR-Katalysatoreinheiten 72, 74 verbindende und zu diesen jeweils orthogonal stehende Linie einander kreuzen. In Umfangsrichtung um die im Wesentlichen eine Längsmittenachse der Abgasbehandlungsanordnung 12 definierende Abgasbehandlungsanordnung-Längsrichtung L_{A} folgt somit eine der Haupt-SCR-Katalysatoreinheiten 72, 74 auf die erste Abgasbehandlungsstrecke 32, folgt die zweite Mischstrecke 56 auf diese Haupt-SCR-Katalysatoreinheit der beiden Haupt-SCR-Katalysatoreinheiten 72, 74, folgt die andere der beiden Haupt-SCR-Katalysatoreinheiten 72, 74 auf die zweite Mischstrecke 56 und folgt dann die erste Abgasbehandlungsstrecke 32 auf die andere der beiden Haupt-SCR-Katalysatoreinheiten 72, 74.

Durch die lösbare Verbindung der Module M1 bis M5 miteinander, wird es möglich, in einfacher Art und Weise Wartungsarbeiten bzw. Reparaturarbeiten vorzunehmen. Beispielsweise kann die einer Verunreinigung stark ausgesetzte Partikelfilteranordnung 36 leicht durch Öffnen der lösbaren Verbindungen derselben mit dem zweiten Modul M2 einerseits und dem vierten Modul M4 andererseits aus der Abgasbehandlungsanordnung 12 herausgenommen werden und gereinigt bzw. durch eine neue oder saubere Partikelfilteranordnung ersetzt werden. Da auch die jeweilige Katalysatoreinheiten bzw. Katalysatorblöcke enthaltenden Module M2 und M5 als solche aus der Abgasbehandlungsanordnung 12 herausgelöst werden können, besteht auch die Möglichkeit, erforderlichenfalls die in diesen Modulen vorhandenen Katalysatoreinheiten bzw. Katalysatorblöcke zu reinigen bzw. neue Module M2, M5 in die Abgasbehandlungsanordnung 12 einzusetzen.

Trotz der kompakten Bauweise wird bei der Abgasbehandlungsanordnung 12 beim Durchströmen von Abgas nur ein vergleichsweise geringer Gegendruck erzeugt, wozu insbesondere auch beiträgt, dass die den wesentlichen Anteil der Stickoxidreduktion übernehmende zweite Abgasbehandlungsstrecke 68 zwei zueinander parallel durchströmbare Haupt-SCR-Katalysatoreinheiten 72, 74 umfasst.

Da die Bereiche, in welchen die verschiedenen Module M1 bis M5 aneinander anschließen und in der vorangehend beschriebenen Art und Weise miteinander lösbar verbunden sind, grundsätzlich von außen frei zugänglich sind, besteht in einfacher Weise die Möglichkeit, diese Bereiche der lösbaren Verbindung der verschiedenen Module miteinander visuell zu inspizieren und auf Dichtigkeit zu überprüfen. Ferner ermöglicht diese freie Zugänglichkeit auch den Einsatz herkömmlicher Werkzeuge zum Öffnen bzw. Herstellen der lösbaren Verbindung der verschiedenen Module miteinander.

## Patentansprüche

1. Modulartig aufgebaute Abgasbehandlungsanordnung, umfassend:
- eine Eintrittsschnittstelle (18) zur Aufnahme von Abgas (A) in der Abgasbehandlungsanordnung (12),
- eine erste Mischstrecke (14),
- eine erste Abgasbehandlungsstrecke (32) mit einer ersten Katalysatoranordnung (34) und einer Partikelfilteranordnung (36),
- eine zweite Mischstrecke (56),
- eine zweite Abgasbehandlungstrecke (68) mit einer zweiten Katalysatoranordnung (70),
- ein einen Austrittsbereich (28) der ersten Mischstrecke (14) mit einem Eintrittsbereich der ersten Abgasbehandlungsstrecke (32) verbindendes erstes Umlenkgehäuse (30),
- ein einen Austrittsbereich (46) der ersten Abgasbehandlungsstrecke (32) mit einem Eintrittsbereich (58) der zweiten Mischstrecke (56) verbindendes zweites Umlenkgehäuse (48),
- ein einen Austrittsbereich (64) der zweiten Mischstrecke (56) mit einem Eintrittsbereich der zweiten Abgasbehandlungsstrecke (68) verbindendes drittes Umlenkgehäuse (66),
**dadurch gekennzeichnet, dass**:
- ein erstes Modul (M1) die Eintrittsschnittstelle (18) und die erste Mischstrecke (14) umfasst,
- ein zweites Modul (M2) das erste Umlenkgehäuse (30) und die erste Katalysatoranordnung (34) der ersten Abgasbehandlungsstrecke (32) umfasst, wobei das zweite Modul (M2) mit dem ersten Modul (M1) lösbar verbunden ist,
- ein drittes Modul (M3) die Partikelfilteranordnung (36) der ersten Abgasbehandlungsstrecke (32) umfasst, wobei das dritte Modul (M3) mit dem zweiten Modul (M2) lösbar verbunden ist,
- ein viertes Modul (M4) das zweite Umlenkgehäuse (48) umfasst, wobei das vierte Modul (M4) mit dem dritten Modul (M3) lösbar verbunden ist,
- ein fünftes Modul (M5) die zweite Mischstrecke (56), das dritte Umlenkgehäuse (66) und die zweite Abgasbehandlungsstrecke (68) umfasst, wobei das fünfte Modul (M5) mit dem vierten Modul (M4) lösbar verbunden ist.

2. Abgasbehandlungsanordnung nach Anspruch 1, **dadurch gekennzeichnet, dass** wenigstens ein Modul von erstem Modul (M1), zweitem Modul (M2), drittem Modul (M3), viertem Modul (M4) und fünftem Modul (M5) mit wenigstens einem weiteren Modul von erstem Modul (M1), zweitem Modul (M2), drittem Modul (M3), viertem Modul (M4) und fünftem Modul (M5) durch eine Schraubverbindung oder/und eine Schellenverbindung lösbar verbunden ist.

3. Abgasbehandlungsanordnung nach Anspruch 1 oder 2, **dadurch gekennzeichnet, dass** der Austrittsbereich (28) der ersten Mischstrecke (14) mit einem Eintrittsbereich (31) des ersten Umlenkgehäuses (30) lösbar verbunden ist.

4. Abgasbehandlungsanordnung nach einem der Ansprüche 1-3, **dadurch gekennzeichnet, dass** ein Austrittsbereich (44) der ersten Katalysatoranordnung (34) mit einem Eintrittsbereich (42) der Partikelfilteranordnung (36) lösbar verbunden ist.

5. Abgasbehandlungsanordnung nach einem der Ansprüche 1-4, **dadurch gekennzeichnet, dass** ein Austrittsbereich (46) der Partikelfilteranordnung (36) mit einem Eintrittsbereich (50) des zweiten Umlenkgehäuses (48) lösbar verbunden ist.

6. Abgasbehandlungsanordnung nach einem der Ansprüche 1-5, **dadurch gekennzeichnet, dass** ein Austrittsbereich (52) des zweiten Umlenkgehäuses (48) mit dem Eintrittsbereich (58) der zweiten Mischstrecke (56) lösbar verbunden ist.

7. Abgasbehandlungsanordnung nach einem der Ansprüche 1-6, **dadurch gekennzeichnet, dass** die erste Katalysatoranordnung (34) eine Vor-SCR-Katalysatoreinheit (38) umfasst, und dass das erste Modul (M1) eine erste Reaktionsmittelschnittstelle (22) zur Aufnahme einer ersten Reaktionsmittelabgabeanordnung (24) aufweist.

8. Abgasbehandlungsanordnung nach Anspruch 7, **dadurch gekennzeichnet, dass** die erste Reaktionsmittelschnittstelle (22) im Bereich des Eintrittsbereichs (16) der ersten Mischstrecke (14) vorgesehen ist.

9. Abgasbehandlungsanordnung nach einem der Ansprüche 1-8, **dadurch gekennzeichnet, dass** die erste Katalysatoranordnung (34) eine Oxidationskatalysatoreinheit (40) umfasst.

10. Abgasbehandlungsanordnung nach einem der Ansprüche 1-9, **dadurch gekennzeichnet, dass** die zweite Katalysatoranordnung (70) wenigstens eine Haupt-SCR-Katalysatoreinheit (72, 74) umfasst, und dass das vierte Modul (M4) eine zweite Reaktionsmittelschnittstelle (60) zur Aufnahme einer zweiten Reaktionsmittelabgabeanordnung (62) aufweist.

11. Abgasbehandlungsanordnung nach Anspruch 10, **dadurch gekennzeichnet, dass** die zweite Katalysatoranordnung (70) zwei zueinander parallel geschaltete Haupt-SCR-Katalysatoreinheiten (72, 74) umfasst.

12. Abgasbehandlungsanordnung nach Anspruch 11, **dadurch gekennzeichnet, dass** in Umfangsrichtung um eine Längsmittenachse der Abgasbehandlungsanordnung (12) eine der Haupt-SCR-Katalysatoreinheiten (72, 74) auf die erste Abgasbehandlungsstrecke (32) folgt, die zweite Mischstrecke (56) auf die eine Haupt-SCR-Katalysatoreinheit der beiden Haupt-SCR-Katalysatoreinheiten (72, 74) folgt, die andere Haupt-SCR-Katalysatoreinheit der beiden Haupt-SCR-Katalysatoreinheiten (72, 74) auf die zweite Mischstrecke (56) folgt und die erste Abgasbehandlungsstrecke (32) auf die andere Haupt-SCR-Katalysatoreinheit der beiden Haupt-SCR-Katalysatoreinheiten (72, 74) folgt.

13. Abgasbehandlungsanordnung nach einem der Ansprüche 1-12, **dadurch gekennzeichnet, dass** die erste Mischstrecke (14) in Richtung einer zu einer Abgasbehandlungsanordnung-Längsachse (L_{A}) im Wesentlichen parallelen ersten Mischstrecken-Längsachse (L_{M1}) langgestreckt ist, dass die zweite Mischstrecke (56) in Richtung einer zu der Abgasbehandlungsanordnung-Längsachse (L_{A}) im Wesentlichen parallelen zweiten Mischstrecken-Längsachse (L_{M2}) langgestreckt ist, dass die erste Abgasbehandlungsstrecke (32) in Richtung einer zu der Abgasbehandlungsanordnung-Längsachse (L_{A}) im Wesentlichen parallelen ersten Abgasbehandlungsstrecken-Längsachse (L_{A1}) langgestreckt ist, dass die zweite Abgasbehandlungsstrecke (68) in Richtung einer zu der Abgasbehandlungsanordnung-Längsachse (L_{A}) im Wesentlichen parallelen zweiten Abgasbehandlungsstrecke-Längsachse (L_{A2}) langgestreckt ist, und dass die erste Mischstrecke (14), die zweite Mischstrecke (56), die erste Abgasbehandlungsstrecke (32) und die zweite Abgasbehandlungsstrecke (68) einander in Richtung der Abgasbehandlungsanordnung-Längsachse (L_{A}) überlappend angeordnet sind.

14. Abgasbehandlungsanordnung nach einem der Ansprüche 1-13, **dadurch gekennzeichnet, dass** das erste Umlenkgehäuse (30) und das dritte Umlenkgehäuse (66) in einem ersten axialen Endbereich (82) der Abgasbehandlungsanordnung (12) bezüglich einer Abgasbehandlungsanordnung-Längsachse (L_{A}) angeordnet sind, und dass das zweite Umlenkgehäuse (48) in einem zweiten axialen Endbereich (84) bezüglich der Abgasbehandlungsanordnung-Längsachse (L_{A}) angeordnet ist.

15. Abgasbehandlungsanordnung nach einem der Ansprüche 1-14, **dadurch gekennzeichnet, dass** ein Austrittsgehäuse (76) vorgesehen ist, wobei ein Austrittsbereich der zweiten Abgasbehandlungsstrecke (68) zu dem Austrittsgehäuse (76) offen ist, und dass an dem Austrittsgehäuse (76) eine Austrittsschnittstelle (80) zur Abgabe von Abgas (A) aus der Abgasbehandlungsanordnung (12) vorgesehen ist.

16. Abgasbehandlungsanordnung nach Anspruch 15, **dadurch gekennzeichnet, dass** wenigstens ein Teil der zweiten Mischstrecke (56) sich im Inneren des Austrittsgehäuses (76) erstreckt.

17. Abgasanlage für eine Brennkraftmaschine, umfassend eine Abgasbehandlungsanordnung (12) nach einem der vorangehenden Ansprüche.

## Claims

1. A modularly constructed exhaust gas treatment arrangement, comprising:
- an entry interface (18) for receiving exhaust gas (A) in the exhaust gas treatment arrangement (12),
- a first mixing section (14),
- a first exhaust gas treatment section (32) having a first catalytic converter arrangement (34) and a particle filter arrangement (36),
- a second mixing section (56),
- a second exhaust gas treatment section (68) having a second catalytic converter arrangement (70),
- a first deflection housing (30), which connects an exit area (28) of the first mixing section (14) to an entry area of the first exhaust gas treatment section (32),
- a second deflection housing (48), which connects an exit area (46) of the first exhaust gas treatment section (32) to an entry area (58) of the second mixing section (56),
- a third deflection housing (66), which connects an exit area (64) of the second mixing section (56) to an entry area of the second exhaust gas treatment section (68),
**characterized in that**:
- a first module (M1) comprises the entry interface (18) and the first mixing section (14),
- a second module (M2) comprises the first deflection housing (30) and the first catalytic converter arrangement (34) of the first exhaust gas treatment section (32), wherein the second module (M2) is detachably connected to the first module (M1),
- a third module (M3) comprises the particle filter arrangement (36) of the first exhaust gas treatment section (32), wherein the third module (M3) is detachably connected to the second module (M2),
- a fourth module (M4) comprises the second deflection housing (48), wherein the fourth module (M4) is detachably connected to the third module (M3),
- a fifth module (M5) comprises the second mixing section (56), the third deflection housing (66), and the second exhaust gas treatment section (68), wherein the fifth module (M5) is detachably connected to the fourth module (M4).

2. The exhaust gas treatment arrangement as claimed in claim 1, **characterized in that** at least one module of the first module (M1), second module (M2), third module (M3), fourth module (M4), and fifth module (M5) is detachably connected to at least one further module of the first module (M1), second module (M2), third module (M3), fourth module (M4), and fifth module (M5) by a screw connection and/or a clamp connection.

3. The exhaust gas treatment arrangement as claimed in claim 1 or 2, **characterized in that** the exit area (28) of the first mixing section (14) is detachably connected to an entry area (31) of the first deflection housing (30).

4. The exhaust gas treatment arrangement as claimed in any one of claims 1-3, **characterized in that** an exit area (44) of the first catalytic converter arrangement (34) is detachably connected to an entry area (42) of the particle filter arrangement (36).

5. The exhaust gas treatment arrangement as claimed in any one of claims 1-4, **characterized in that** an exit area (46) of the particle filter arrangement (36) is detachably connected to an entry area (50) of the second deflection housing (48).

6. The exhaust gas treatment arrangement as claimed in any one of claims 1-5, **characterized in that** an exit area (52) of the second deflection housing (48) is detachably connected to the entry area (58) of the second mixing section (56).

7. The exhaust gas treatment arrangement as claimed in any one of claims 1-6, **characterized in that** the first catalytic converter arrangement (34) comprises a pre-SCR catalytic converter unit (38), and the first module (M1) has a first reaction agent interface (22) for receiving a first reaction agent dispensing arrangement (24).

8. The exhaust gas treatment arrangement as claimed in claim 7, **characterized in that** the first reaction agent interface (22) is provided in the area of the entry area (16) of the first mixing section (14).

9. The exhaust gas treatment arrangement as claimed in any one of claims 1-8, **characterized in that** the first catalytic converter arrangement (34) comprises an oxidation catalytic converter unit (40).

10. The exhaust gas treatment arrangement as claimed in any one of claims 1-9, **characterized in that** the second catalytic converter arrangement (70) comprises at least one main SCR catalytic converter unit (72, 74), and the fourth module (M4) has a second reaction agent interface (60) for receiving a second reaction agent dispensing arrangement (62).

11. The exhaust gas treatment arrangement as claimed in claim 10, **characterized in that** the second catalytic converter arrangement (70) comprises two main SCR catalytic converter units (72, 74) connected in parallel to one another.

12. The exhaust gas treatment arrangement as claimed in claim 11, **characterized in that** in the circumferential direction around a longitudinal center axis of the exhaust gas treatment arrangement (12), one of the main SCR catalytic converter units (72, 74) follows the first exhaust gas treatment section (32), the second mixing section (56) follows the one main SCR catalytic converter unit of the two main SCR catalytic converter units (72, 74), the other main SCR catalytic converter unit of the two main SCR catalytic converter units (72, 74) follows the second mixing section (56), and the first exhaust gas treatment section (32) follows the other main SCR catalytic converter unit of the two main SCR catalytic converter units (72, 74).

13. The exhaust gas treatment arrangement as claimed in any one of claims 1-12, **characterized in that** the first mixing section (14) is elongated in the direction of a first mixing section longitudinal axis (L_{M1}) essentially parallel to an exhaust gas treatment arrangement longitudinal axis (L_{A}), the second mixing section (56) is elongated in the direction of a second mixing section longitudinal axis (L_{M2}) essentially parallel to the exhaust gas treatment arrangement longitudinal axis (L_{A}), the first exhaust gas treatment section (32) is elongated in the direction of a first exhaust gas treatment section longitudinal axis (L_{A1}) essentially parallel to the exhaust gas treatment arrangement longitudinal axis (L_{A}), the second exhaust gas treatment section (68) is elongated in the direction of a second exhaust gas treatment section longitudinal axis (L_{A2}) essentially parallel to the exhaust gas treatment arrangement longitudinal axis (L_{A}), and the first mixing section (14), the second mixing section (56), the first exhaust gas treatment section (32), and the second exhaust gas treatment section (68) are arranged overlapping one another in the direction of the exhaust gas treatment arrangement longitudinal axis (L_{A}).

14. The exhaust gas treatment arrangement as claimed in any one of claims 1-13, **characterized in that** the first deflection housing (30) and the third deflection housing (66) are arranged in a first axial end area (82) of the exhaust gas treatment arrangement (12) with respect to an exhaust gas treatment arrangement longitudinal axis (L_{A}), and the second deflection housing (48) is arranged in a second axial end area (84) with respect to the exhaust gas treatment arrangement longitudinal axis (L_{A}).

15. The exhaust gas treatment arrangement as claimed in any one of claims 1-14, **characterized in that** an exit housing (76) is provided, wherein an exit area of the second exhaust gas treatment section (68) is open to the exit housing (76), and an exit interface (80) for emitting exhaust gas (A) from the exhaust gas treatment arrangement (12) is provided on the exit housing (76).

16. The exhaust gas treatment arrangement as claimed in claim 15, **characterized in that** at least a part of the second mixing section (56) extends in the interior of the exit housing (76).

17. An exhaust gas system for an internal combustion engine, comprising an exhaust gas treatment arrangement (12) as claimed in any one of the preceding claims.

## Revendications

1. Un dispositif de traitement des gaz d'échappement de construction modulaire, comprenant :
- une interface d'entrée (18) pour recevoir les gaz d'échappement (A) dans le dispositif de traitement des gaz d'échappement (12),
- une première section de mélange (14),
- une première section de traitement des gaz d'échappement (32) comprenant un premier dispositif de catalyseur (34) et un dispositif de filtre à particules (36),
- une deuxième section de mélange (56),
- une deuxième section de traitement des gaz d'échappement (68) comprenant un deuxième dispositif de catalyseur (70),
- un premier boîtier de déviation (30), qui relie une zone de sortie (28) de la première section de mélange (14) à une zone d'entrée de la première section de traitement des gaz d'échappement (32),
- un deuxième boîtier de déviation (48), qui relie une zone de sortie (46) de la première section de traitement des gaz d'échappement (32) à une zone d'entrée (58) de la deuxième section de mélange (56),
- un troisième boîtier de déviation (66), qui relie une zone de sortie (64) de la deuxième section de mélange (56) à une zone d'entrée de la deuxième section de traitement des gaz d'échappement (68),
**caractérisé en ce que** :
- un premier module (M1) comprend l'interface d'entrée (18) et la première section de mélange (14),
- un deuxième module (M2) comprend le premier boîtier de déviation (30) et le premier dispositif de catalyseur (34) de la première section de traitement des gaz d'échappement (32), le deuxième module (M2) étant relié de manière amovible au premier module (M1),
- un troisième module (M3) comprend le dispositif de filtre à particules (36) de la première section de traitement des gaz d'échappement (32), le troisième module (M3) étant relié de manière amovible au deuxième module (M2),
- un quatrième module (M4) comprend le deuxième boîtier de déviation (48), le quatrième module (M4) étant relié de manière amovible au troisième module (M3),
- un cinquième module (M5) comprend la deuxième section de mélange (56), le troisième boîtier de déflexion (66) et la deuxième section de traitement des gaz d'échappement (68), le cinquième module (M5) étant relié de manière amovible au quatrième module (M4).

2. Le dispositif de traitement des gaz d'échappement selon la revendication 1, **caractérisé en ce qu'**au moins un module du premier module (M1), du deuxième module (M2), du troisième module (M3), du quatrième module (M4) et du cinquième module (M5) est relié de manière amovible à au moins un autre module du premier module (M1), du deuxième module (M2), du troisième module (M3), quatrième module (M4) et cinquième module (M5) par un raccord à vis et/ou un raccord à pince.

3. Le dispositif de traitement des gaz d'échappement selon la revendication 1 ou 2, **caractérisé en ce que** la zone de sortie (28) de la première section de mélange (14) est reliée de manière amovible à une zone d'entrée (31) du premier boîtier de déviation (30).

4. Le dispositif de traitement des gaz d'échappement selon l'une quelconque des revendications 1 à 3, **caractérisé en ce qu'**une zone de sortie (44) du premier dispositif de catalyseur (34) est reliée de manière amovible à une zone d'entrée (42) du dispositif de filtre à particules (36).

5. Le dispositif de traitement des gaz d'échappement selon l'une quelconque des revendications 1 à 4, **caractérisé en ce qu'**une zone de sortie (46) du dispositif de filtre à particules (36) est reliée de manière amovible à une zone d'entrée (50) du deuxième boîtier de déviation (48).

6. Le dispositif de traitement des gaz d'échappement selon l'une quelconque des revendications 1 à 5, **caractérisé en ce qu'**une zone de sortie (52) du deuxième boîtier de déviation (48) est reliée de manière amovible à la zone d'entrée (58) de la deuxième section de mélange (56).

7. Le dispositif de traitement des gaz d'échappement selon l'une quelconque des revendications 1 à 6, **caractérisé en ce que** le premier dispositif de catalyseur (34) comprend une unité de catalyseur pré-SCR (38), et le premier module (M1) comprend une première interface d'agent de réaction (22) pour recevoir un premier dispositif de distribution d'agent de réaction (24).

8. Le dispositif de traitement des gaz d'échappement selon la revendication 7, **caractérisé en ce que** la première interface d'agent de réaction (22) est prévue dans la zone de la zone d'entrée (16) de la première section de mélange (14).

9. Le dispositif de traitement des gaz d'échappement selon l'une quelconque des revendications 1 à 8, **caractérisé en ce que** le premier dispositif de catalyseur (34) comprend une unité de catalyseur d'oxydation (40).

10. Le dispositif de traitement des gaz d'échappement selon l'une quelconque des revendications 1 à 9, **caractérisé en ce que** le deuxième dispositif de catalyseur (70) comprend au moins une unité de catalyseur SCR principale (72, 74), et le quatrième module (M4) comprend une deuxième interface d'agent de réaction (60) pour recevoir un deuxième dispositif de distribution d'agent de réaction (62).

11. Le dispositif de traitement des gaz d'échappement selon la revendication 10, **caractérisé en ce que** le deuxième dispositif de catalyseur (70) comprend deux unités de catalyseur SCR principales (72, 74) connectées en parallèle l'une à l'autre.

12. Le dispositif de traitement des gaz d'échappement selon la revendication 11, **caractérisé en ce que**, dans la direction circonférentielle autour d'un axe central longitudinal du dispositif de traitement des gaz d'échappement (12), l'une des unités de catalyseur SCR principales (72, 74) suit la première section de traitement des gaz d'échappement (32), la deuxième section de mélange (56) suit l'une des deux unités de catalyseur SCR principales (72, 74), l'autre unité de catalyseur SCR principale des deux unités de catalyseur SCR principales (72, 74) suit la deuxième section de mélange (56), et la première section de traitement des gaz d'échappement (32) suit l'autre unité de catalyseur SCR principale des deux unités de catalyseur SCR principales (72, 74).

13. Le dispositif de traitement des gaz d'échappement selon l'une quelconque des revendications 1 à 12, **caractérisé en ce que** la première section de mélange (14) est allongée dans la direction d'un premier axe longitudinal de section de mélange (L_{M1}) essentiellement parallèle à un axe longitudinal de dispositif de traitement des gaz d'échappement (L_{A}), la deuxième section de mélange (56) est allongée dans la direction d'un deuxième axe longitudinal de section de mélange (L_{M2}) essentiellement parallèle à l'axe longitudinal de dispositif de traitement des gaz d'échappement (L_{A}), la première section de traitement des gaz d'échappement (32) est allongée dans la direction d'un premier axe longitudinal de section de traitement des gaz d'échappement (L_{A1}) essentiellement parallèle à l'axe longitudinal du dispositif de traitement des gaz d'échappement (L_{A}), la deuxième section de traitement des gaz d'échappement (68) est allongée dans la direction d'un deuxième axe longitudinal de section de traitement des gaz d'échappement (L_{A2}) essentiellement parallèle à l'axe longitudinal du dispositif de traitement des gaz d'échappement (L_{A}), et la première section de mélange (14), la deuxième section de mélange (56), la première section de traitement des gaz d'échappement (32) et la deuxième section de traitement des gaz d'échappement (68) sont disposées de manière à se chevaucher dans la direction de l'axe longitudinal (L_{A}) du dispositif de traitement des gaz d'échappement.

14. Le dispositif de traitement des gaz d'échappement selon l'une quelconque des revendications 1 à 13, **caractérisé en ce que** le premier boîtier de déviation (30) et le troisième boîtier de déviation (66) sont disposés dans une première zone d'extrémité axiale (82) du dispositif de traitement des gaz d'échappement (12) par rapport à un axe longitudinal (L_{A}) du dispositif de traitement des gaz d'échappement, et le deuxième boîtier de déviation (48) est disposé dans une deuxième zone d'extrémité axiale (84) par rapport à l'axe longitudinal (L_{A}) du dispositif de traitement des gaz d'échappement.

15. Le dispositif de traitement des gaz d'échappement selon l'une quelconque des revendications 1 à 14, **caractérisé en ce qu'**un boîtier de sortie (76) est prévu, dans lequel une zone de sortie de la deuxième section de traitement des gaz d'échappement (68) est ouverte sur le boîtier de sortie (76), et une interface de sortie (80) pour émettre les gaz d'échappement (A) du dispositif de traitement des gaz d'échappement (12) est prévue sur le boîtier de sortie (76).

16. Un système de traitement des gaz d'échappement selon la revendication 15, **caractérisé en ce qu'**au moins une partie de la deuxième section de mélange (56) s'étend à l'intérieur du boîtier de sortie (76).

17. Le système de gaz d'échappement pour un moteur à combustion interne, comprenant un système de traitement des gaz d'échappement (12) selon l'une quelconque des revendications précédentes.
